# EUROPÄISCHE PATENTSCHRIFT

(11) **EP 3 378 596 B1**
(45) Veröffentlichungstag und Bekanntmachung des Hinweises auf die Patenterteilung: **25.09.2019**
(21) Anmeldenummer: 18154739.9
(22) Anmeldetag: 01.02.2018
(51) Int. Cl.: B25B 21/02, A01G 3/053

(54) **ELEKTROHANDWERKZEUGMASCHINE UND SCHLAGMECHANISMUS HIERFÜR**
ELECTRIC HANDHELD MACHINE TOOL AND IMPACT MECHANISM THEREFOR
MACHINE-OUTIL PORTATIVE ÉLECTRIQUE ET MÉCANISME DE PERCUSSION CORRESPONDANT

(30) Priorität: 15.02.2017 DE 102017103006
(43) Veröffentlichungstag der Anmeldung: 26.09.2018
(73) Patentinhaber: Metabowerke GmbH, 72622 Nürtingen (DE)
(72) Erfinder: Seyerle, Jörg, 73257 Köngen (DE)
(74) Vertreter: Markfort, Iris-Anne Lucie

(56) Entgegenhaltungen:
- EP-A1- 2 027 768
- WO-A1-2014/038987
- DE-B3-102011 086 081

## Beschreibung

Die Erfindung betrifft eine Elektrohandwerkzeugmaschine gemäß dem Oberbegriff des Anspruchs 1. Weiterhin betrifft die Erfindung einen Schlagmechanismus für eine Elektrohandwerkzeugmaschine gemäß dem Oberbegriff des Anspruchs 12. Elektrohandwerkzeugmaschinen, die mit einem Schlagmechanismus ausgestattet sind, sind aus dem Stand der Technik hinlänglich bekannt. Insbesondere werden Bohrmaschinen oftmals mit einem solchen Schlagmechanismus ausgestattet, um diese effizienter zu machen.

Weiterhin sind aus dem Stand der Technik auch Schneidgeräte zum Schneiden und Trimmen von Pflanzen, beispielsweise eine Heckenschere oder dergleichen, bekannt. Aus dem Stand der Technik bekannte Heckenscheren umfassen zwei längliche Schneidmesser, die sich relativ zueinander entlang einer Bewegungsachse bewegen lassen. Bei einer bekannten Ausführungsart ist eines der Schneidmesser bezüglich der Heckenschere fest, während das andere relativ zu dem ersten Schneidmesser vor- und zurückbewegt werden kann. Gemäß einer zweiten bekannten Ausführungsform können jedoch auch beide Schneidmesser relativ zueinander und zu dem übrigen Teil der Heckenschere vor- und zurückbewegbar ausgebildet sein, wobei diese in Gegenrichtung zueinander bewegt werden.

Zum Antrieb des wenigstens einen bewegbaren Schneidmessers ist beispielsweise ein Elektromotor oder ein kleiner Verbrennungsmotor vorgesehen, der das wenigstens eine Schneidmesser mittels eines Kurbelelements oder dergleichen antreibt. Ein solches Schneidgerät ist beispielsweise aus der JP 2005-269972 bekannt.

Bei bekannten Heckenscheren wird mittels einer Bewegungswandlungseinrichtung die von dem Antrieb abgegebene Drehbewegung um eine Rotationsachse in eine translatorische Bewegung des wenigstens einen bewegbaren Schneidmessers entlang seiner Bewegungsachse umgewandelt.

Ein Problem, das oftmals im Zusammenhang mit aus dem Stand der Technik bekannten Heckenscheren und ähnlichen Schneidgeräten auftritt, besteht darin, dass das bewegbare Schneidmesser im Betrieb in einer Bewegungsrichtung entlang seiner Bewegungsrichtung blockiert sein kann, beispielsweise dann, wenn das Schneidmesser in Eingriff mit einem Ast oder dergleichen gelangt, dessen Größe oder Festigkeit die Kapazität des bzw. der Schneidmesser übersteigt. Alternativ kann es auch passieren, dass sich ein Draht oder dergleichen zwischen den Bewegungsmessern verklemmt, so dass das wenigstens eine bewegbare Schneidmesser blockiert ist.

In der Praxis verwendet oftmals der Anwender seine Hände, um den verkeilten Ast oder den Draht zwischen den Schneidmessern herauszulösen, um das Schneidgerät weiter benutzen zu können. Dies stellt jedoch ein bekanntes Sicherheitsrisiko für den Anwender dar und ist daher zu vermeiden.

In gleicher Weise kann bei einer Bohrmaschine ein Verkanten des Werkzeugs in dem zu bearbeitenden Werkstück auftreten und ein Verletzungsrisiko für den Anwender, der dieses wieder lösen möchte, mit sich bringen.

Eine mögliche Lösung dieses Problems aus dem Stand der Technik besteht darin, eine zu der Bewegung des Werkzeugs in Bearbeitungsrichtung entgegengesetzte Gegenbewegung in das Werkzeug einzuleiten. So kann bei einem Schneidgerät das in Richtung seiner Bewegung blockierte Schneidmesser durch Richtungsumkehr der Bewegung aus der blockierten Stellung gelöst werden. Hierfür schlägt beispielsweise die EP 2 027 768 A1 eine Antriebssteuerung vor, die dann, wenn die Schneidbelastung einen bestimmten Wert überschreitet, was beispielsweise durch einen erhöhten Stromverbrauch des Motors oder einer verringerten Bewegungsgeschwindigkeit des Schneidmessers ermittelt wird, die Bewegungsrichtung des Motors umkehrt, um damit auch eine Bewegungsumkehr des Schneidmessers zu erreichen.

Als nachteilig bei dieser Lösung hat sich jedoch in der Praxis gezeigt, dass dadurch, dass der Motor zuerst in einen ermittelbaren Blockierzustand gelangen muss, bei dem der Stromverbrauch erhöht ist, sowohl der Motor als auch ein gegebenenfalls verwendeter Akkumulator eine geringere Lebensdauer haben. Des Weiteren kann das Vorsehen einer zusätzlichen Steuerung mit Sensoren und dergleichen eine Erhöhung der Herstellkosten mit sich bringen. Fällt ein solcher Sensor im Betrieb einmal aus, so stellt sich für den Anwender die aus der Praxis bekannte ungewollte Blockiersituation des Motors ein, bei der er wiederum von Hand die Blockierung lösen muss.

Eine weitere aus dem Stand der Technik bekannte Lösung sieht einen Schlagmechanismus vor. So ist in der deutschen Patentschrift DE 10 2011 086 081 B3 ein Schneidgerät beschrieben, das einen Schlagmechanismus umfasst, der dazu eingerichtet ist, dann, wenn das wenigstens eine Schneidmesser in Richtung seiner Bewegung blockiert ist, eine zu der blockierten Bewegung gleichgerichtete Schlagbewegung auf das Schneidmesser zu übertragen. Somit wird hierbei die Bewegung des blockierenden Schneidmessers nicht umgekehrt, um die entstandene Blockierung zu lösen, sondern es wird eine zusätzliche gleichgerichtete Schlagbewegung auf das Schneidmesser übertragen, die dazu dienen soll, das Hindernis, welches das Schneidmesser in seiner Bewegung blockiert, schlagartig zu durchtrennen.

Eine ähnliche Lösung ist auch im Zusammenhang mit Bohrmaschinen hinlänglich bekannt.

Wenngleich diese Lösung für ein Schneidgerät sich in der Praxis als insgesamt sehr vorteilhaft gezeigt hat, konnte auch ein Nachteil dieser Lösung ermittelt werden. So wird ein Teil der Schlagenergie des Schlagmechanismus beim Schlagen auf das blockierende Teil, beispielsweise den Ast oder den Draht, auf das Schlagwerk reflektiert und das wenigstens eine bewegbare Schneidmesser in eine zu seiner Bewegungsrichtung entgegengesetzte Richtung verlagert. Das wenigstens eine bewegbare Schneidmesser federt quasi zurück. Dementsprechend muss dieses bei dem nächsten Schlag, wenn das zu durchtrennende Hindernis nicht mit einem einzigen Schlag durchtrennt und so die Blockierung gelöst wurde, um diesen Rückfederweg nach vorne transportiert werden, so dass ein Teil der Schlagenergie und des verfügbaren Schlaghubs quasi verpufft. Im Ergebnis führt dies beispielsweise bei der Bearbeitung eines dicken Astes dazu, dass ein Teil der Schneidenergie zum Aufweiten eines bereits bestehenden Schneidkeils am Ast benötigt wird und nicht zum tatsächlichen Durchtrennen des Astes genutzt werden kann.

Ein ähnlicher Effekt ist auch bei Bohrmaschinen mit Schlagmechanismus bekannt.

Demgegenüber besteht eine Aufgabe der vorliegenden Erfindung darin, eine verbesserte Elektrowerkzeugmaschine bereitzustellen, bei der die aus dem Stand der Technik bekannt gewordenen Nachteile zumindest teilweise verringert werden können.

Hierfür schlägt die vorliegende Erfindung vor, ein Schneidgerät bereitzustellen, das die Merkmale des Anspruchs 1 aufweist. Demgemäß umfasst das Schneidwerkzeug ferner eine Rückschlagsperre auf. Alternativ lässt sich jedoch die vorliegende Erfindung auch auf andere Elektrohandwerkzeugmaschinen, wie Bohrmaschinen mit einem Schlagmechanismus übertragen.

Die Rückschlagsperre vermeidet den unerwünschten Rückfedereffekt, der immer dann eintritt, wenn das Schneidgut nicht mit einem einzigen Schlag durchtrennt werden konnte und die Blockierung des wenigstens einen Schneidmessers in Richtung seiner Bewegung weiterhin besteht. Durch die Rückschlagsperre verbleibt das wenigstens eine bewegbare Schneidmesser in seiner Anlagestellung an dem Schneidgut, so dass der nächste Schlag nicht zu einer Aufweitung des Keils führt, sondern die Schlagenergie zur weiteren Vertiefung des Schneidkeils am Schneidgut genutzt werden kann. Ein Leerweg oder Leerhub, wie er bei einem zurückfedernden Schneidmesser auftritt, kann hierdurch vermieden.

Darüber hinaus betrifft die vorliegende Erfindung einen Schlagmechanismus für ein Elektrohandwerkzeuggerät, wobei der Schlagmechanismus eine Rückschlagsperre aufweist und dazu eingerichtet ist, dann, wenn ein Werkzeug der Elektrowerkzeugmaschine in Richtung seiner Bewegung blockiert ist, eine zu der blockierten Bewegung gleichgerichtete Schlagbewegung auf das Werkzeug zu übertragen.

Nachfolgend ist die Erfindung insbesondere im Zusammenhang mit einem Schneidgerät beschrieben. Jedoch kann die erfindungsgemäße Rückschlagsperre selbstverständlich auch im Zusammenhang mit anderen Elektrohandwerkzeugmaschinen bzw. Elektrohandwerkzeuggeräten angewendet werden, da all diesen Geräten das gleiche aus der Praxis bekannt gewordene, nachfolgend geschilderte Problem gemein ist. So ist es beispielsweise denkbar eine Bohrmaschine mit Schlagmechanismus oder auch einen Schrauber mit Schlagmechanismus mit der erfindungsgemäßen Rückschlagsperre auszustatten.

Die Antriebseinheit gemäß der vorliegenden Erfindung umfasst sowohl einen Antrieb, beispielsweise einen Elektromotor oder einen kleinen Verbrennungsmotor, sowie gegebenenfalls auch ein Getriebe oder dergleichen.

Grundsätzlich ist es denkbar, dass es sich bei der gleichgerichteten Schlagbewegung um eine Drehbewegung (Drehschlagmechanismus) handelt, bei der die Schlagbewegung zu der blockierten Bewegung bezogen auf die Impulsdauer ein deutlich höheres resultierendes Antriebsmoment aufweist als dies bei einem konstanten Drehmomentverlauf im Normalbetrieb, das heißt ohne dass das wenigstens eine Schneidmesser in Richtung seiner Bewegung blockiert ist, der Fall wäre. Daneben ist es jedoch ebenfalls denkbar, dass die Schlagbewegung als translatorische Bewegung, welche zu der blockierten Bewegung gleichgerichtet ist, auf das Schneidmesser übertragen wird.

Gemäß einer Weiterbildung der Erfindung kann vorgesehen sein, dass die Rückschlagsperre einen Freilauf umfasst. Ein Freilauf ist dadurch gekennzeichnet, dass er eine Bewegung in eine Richtung freigibt, während er eine Bewegung in der entgegengesetzten Richtung sperrt. Je nach Art der Schlagbewegung ist dementsprechend auch der Freilauf derart gestaltet, dass er entweder eine Drehbewegung in eine erste Richtung freigibt (Freilaufrichtung) und in die dazu entgegengesetzte Richtung sperrt (Sperrrichtung), oder dass er eine translatorische Bewegung in eine erste Richtung freigibt und in eine dazu entgegengesetzte Bewegung sperrt. In einem Fall, in dem die erfindungsgemäß Rückschlagsperre einen Freilauf umfasst und bei einem Schrauber mit Schlagmechanismus eingesetzt wird, der in zwei Drehrichtungen betrieben werden kann (beispielsweise zum Ein- und Ausschrauben), kann zusätzlich der Freilauf umschaltbar sein, d.h. die Freilaufrichtung und die Sperrrichtung können bei Bedarf vertauscht werden. Derartige umschaltbare Freiläufe sind im Allgemeinen bekannt, so dass auf die Beschreibung der technischen Umsetzung des Freilaufs verzichtet wird.

Weiterhin kann vorgesehen sein, dass die Rückschlagsperre zwischen dem Schlagmechanismus und dem wenigstens einen Schneidmesser angeordnet ist. Ein Vorteil dieser Anordnung besteht darin, dass alle hinter der Rückschlagsperre angeordneten Bauteile, insbesondere auch Getriebeteile und deren Verzahnungen, vor der unerwünschten Rückschlagenergie geschützt werden.

Weiterhin kann vorgesehen sein, dass die Antriebseinheit einer Antriebswelle zum Antrieb des wenigstens einen Schneidmessers aufweist, und dass der Schlagmechanismus einen Hammer umfasst, der auf der Antriebswelle geführt ist, wobei der Hammer dazu eingerichtet ist, die Antriebswelle mit einer mit dem wenigstens einen Schneidmesser koppelbaren Abtriebswelle lösbar zu koppeln, um die Drehbewegung der Antriebswelle auf die Abtriebswelle und somit auf das wenigstens eine Schneidmesser zu übertragen. Gemäß dieser Ausführungsform übernimmt der Hammer des Schlagmechanismus quasi die Funktion einer Kupplung, welche zumindest im Normalbetrieb die Antriebswelle mit der Abtriebswelle kuppelt. Der Hammer kann ferner dazu ausgebildet sein, dann, wenn das wenigstens eine Schneidmesser in Richtung seiner Bewegung blockiert ist, relativ zu der Abtriebswelle eine axiale Bewegung durchzuführen, um die Kopplung der Abtriebswelle mit der Antriebswelle zu lösen. Eine solche Ausführungsform hat den Vorteil, dass gerade in dem Betriebszustand, in dem im Stand der Technik die höchste Belastung auf den Motor einwirkt, das heißt dann, wenn infolge einer Blockierung des wenigstens einen bewegbaren Schneidmessers auch der Motor in einen Blockierzustand gelangt, die mit dem Schneidmesser koppelbare Abtriebswelle von der Antriebswelle der Antriebseinheit entkoppelt wird. Auf diese Weise kann der Motor weiterlaufen und damit auch kontinuierlich gekühlt werden. Weiterhin gelangt der Motor nicht in den unerwünschten Blockierzustand, so dass auch der Stromverbrauch nicht, wie es in der Praxis bei den aus dem Stand der Technik bekannten Lösungen der Fall ist, ansteigt. Dies ist gerade bei ackubetriebenen Schneidgeräten sehr von Vorteil.

Es kann weiterhin vorgesehen sein, dass die Abtriebswelle einen Exzenter zur Übertragung des Antriebsmoments auf das wenigstens ein Schneidmesser umfasst.

Zudem kann vorgesehen sein, dass der Schlagmechanismus einen Amboss umfasst, der mit der Abtriebswelle verbunden ist, um das Antriebsdrehmoment auf diese zu übertragen, wobei der Hammer und der Amboss des Schlagmechanismus jeweils wenigstens einen Schlagnocken aufweisen, wobei die Schlagnocken im Normalbetrieb aneinander anliegen, um die Drehbewegung von der Antriebswelle auf die Abtriebswelle zu übertragen, und wobei die Schlagnocken dann, wenn das wenigstens eine Schneidmesser in Richtung seiner Bewegung blockiert ist, eine relative Rotationsbewegung und/oder eine axiale Bewegung zueinander auszuführen vermögen. Die Verbindung von Amboss und Abtriebswelle kann in unterschiedlicher Weise ausgestaltet sein, beispielsweise durch einen Formschluss in Drehrichtung (Keilwellenverbindung oder dergleichen). Alternativ kann die Verbindung jedoch auch dazwischengeschaltete Bauteile umfassen, beispielsweise in der Art einer Kupplung. Grundsätzlich ist es auch denkbar, dass diese Kupplung in der Art eines Freilaufs wirkt und hierüber die Rückschlagsperre realisiert ist.

In einer Weiterbildung der Erfindung sind zwei diametral angeordnete Schlagnocken sowohl am Hammer als auch am Amboss vorgesehen. Alternativ sind jedoch auch mehr als zwei Schlagnocken, beispielsweise drei, vier oder fünf Schlagnocken, denkbar, die in regelmäßigen Abständen zueinander an dem Hammer und an dem Amboss ausgebildet sind.

Die vorstehend erwähnte denkbare axiale Bewegung des Hammers relativ zu der Antriebswelle oder relativ zu dem Amboss kann weiterhin oszillierend sein. Bei einer axial oszillierenden Bewegung wird der Hammer des Schlagmechanismus dann, wenn das wenigstens eine Schneidmesser in Richtung seiner Bewegung blockiert ist, auf der Antriebswelle abwechselnd axial in Richtung auf das antriebsseitige Ende der Antriebswelle und auf das abtriebsseitige Ende (in Richtung zu der Abtriebswelle) auf der Antriebswelle hin und her bewegt.

Des Weiteren kann der Hammer auch dazu eingerichtet sein, sich im Normalbetrieb mit der Antriebswelle mitzudrehen und dann, wenn das wenigstens eine Schneidgerät in Richtung seiner Bewegung blockiert ist, relativ zu der Antriebswelle eine Rotationsbewegung durchzuführen. Die Rotation des Hammers relativ zu der Antriebswelle ermöglicht es, dass sich der Hammer relativ zu der Antriebswelle schneller oder langsamer drehen kann, wodurch die Schlagbewegung des Schlagmechanismus durch den Hammer erzeugt werden kann.

Die Antriebswelle kann ferner wenigstens eine V-förmige Nut aufweisen und der Hammer in der wenigstens einen V-förmigen Nut der Antriebswelle geführt sein. Eine solche Gestaltung des Schlagmechanismus ist im Grundsatz ähnlich der Gestaltung bei einem sogenannten V-Nutenschlagwerk, wie es beispielsweise bei Schlagschraubern zur Erzeugung einer Schlagbewegung ausgeführt ist. Durch diese spezielle Art der Führung des Hammers bezüglich der Antriebswelle kann sich diese relativ zu letzterem in einem vorgegebenen Maße rotatorisch sowie auch axial bewegen, so dass es zu einem Trennen des Hammers von der Abtriebswelle und gleichzeitig zu einer Verlangsamung oder Beschleunigung des Hammers relativ zu der Antriebswelle kommt.

Bei einer Ausführungsform, bei der eine V-förmige Nut an der Antriebswelle ausgebildet ist, in der der Hammer geführt ist, kann die Spitze des V in Richtung zu der Abtriebswelle an der Antriebswelle ausgebildet sein, so dass durch die axiale Bewegung aufgrund der V-Form der Nut zugleich auch eine relative Rotationsbewegung des Hammers zur Antriebswelle ausgeführt wird.

Weiterhin kann vorgesehen sein, dass der Schlagmechanismus ein elastisches Element zum Zwischenspeichern einer für die Schlagbewegung benötigten Schlagenergie umfasst. Dabei kann das elastische Element insbesondere eine Feder umfassen, die den Hammer axial in Richtung zu der Antriebswelle vorzuspannen vermag.

Eine alternative Ausgestaltung, bei der das elastische Element beispielsweise ein Elastomerelement oder dergleichen umfasst, ist jedoch ebenfalls denkbar.

Die Führung des Hammers in der wenigstens einen V-förmigen Nut der Antriebswelle kann beispielsweise über eine Kugelführung oder dergleichen realisiert sein.

Gemäß der vorstehend beschriebenen Ausführungsform des Schlagmechanismus dreht sich der Hammer im Normalbetrieb mit der Antriebwelle mit, wobei der wenigstens eine Schlagnocken des Hammers an dem wenigstens einen Schlagnocken des Amboss anliegt, so dass die mit letzterem fest verbunden Abtriebswelle über den Hammer von der Antriebswelle angetrieben wird. Die Abtriebswelle gibt das Antriebsdrehmoment beispielsweise über eine Bewegungswandlungseinrichtung an das wenigstens eine bewegbare Schneidmesser ab, wobei die Bewegungswandlungseinrichtung die Drehbewegung in eine Linearbewegung überführt. Stößt das wenigstens eine bewegbare Schneidmesser nun auf ein Hindernis, das seine Schneidbewegung blockiert, so führt dies auch zu einem Blockieren der Abtriebswelle. Der über den wenigstens einen Schlagnocken mit der Abtriebswelle gekoppelte Hammer führt nun aufgrund des weiterhin anliegenden Antriebsdrehmoments der Antriebswelle eine rotatorische Relativbewegung zu dieser aus, wobei aufgrund der Führung in der wenigstens einen V-Nut zugleich eine axiale Bewegung des Hammers relativ zu der Antriebswelle und von der Abtriebswelle weg erfolgt. Dadurch kommt es zu einer Entkoppelung von Hammer und Amboss, so dass der Antrieb und die Antriebswelle sich weiterhin, trotz der Blockierung des wenigstens einen bewegbaren Schneidmesser, bewegen können. Die vorgesehene Feder, die den Hammer in Richtung zu der Abtriebswelle vorspannt, wird bei dieser axialen Bewegung relativ zu der Antriebswelle und von der Abtriebswelle weg weiter vorgespannt und speichert dadurch Energie zwischen. Diese zwischengespeicherte Energie kann dann, wenn der Hammer vollständig von dem Amboss gelöst wird, wieder freigesetzt werden und den Hammer in der V-Nut geführt beschleunigen, bis er am Ende seiner Drehbewegung und axialen Bewegung mit seinem wenigstens einen Schlagnocken auf den wenigstens einen Schlagnocken des Ambosses auftrifft und so einen Schlag in Umfangsrichtung ausführt, welcher sich über die Abtriebswelle auf das blockierte Schneidmesser überträgt. Nach dem Schlag erfolgt das Spannen des Schlagmechanismus durch eine Axial- und Radialbewegung des Hammers erneut, so lange, bis das Hindernis, wie beispielsweise ein Ast, durchschlagen ist.

Bei einer Weiterbildung der Erfindung kann die Vorspannkraft der Feder des Schlagmechanismus variabel einstellbar sein, so dass hierüber eine Drehmomenteneinstellung realisiert werden kann.

Schließlich kann die Antriebseinheit des Schneidgeräts ferner wenigstens ein Getriebe mit wenigstens einer Getriebestufe umfassen, wobei die Antriebswelle getriebeausgangsseitig angeordnet ist. Das Getriebe kann erfindungsgemäß eine einzige Getriebestufe umfassen, d.h. nicht schaltbar sein, oder mehrere Getriebestufen umfassen und damit schaltbar ausgebildet sein, wobei jede der Getriebestufen unterschiedliche Über- oder Untersetzungen des Ausgangsdrehmoments des Antriebs bereitstellen kann.

Alternativ ist es jedoch ebenfalls denkbar kein Getriebe vorzusehen, sondern das von dem Antrieb abgegebene Drehmoment ohne Über-bzw. Untersetzung an die Antriebswelle weiterzugeben. Als Antrieb kann in diesem Fall vorteilhaft ein sogenannter Langsamläufer, wie beispielsweise ein EC-Motor (bürstenlose Gleichstrommaschine), verwendet werden. Des Weiteren kann je nach Gestaltung des Hammers und der koppelbaren Abtriebswelle der Schlagmechanismus eine Unter- oder Übersetzung des von der Antriebswelle abgegebenen Drehmoments erreichen.

Zudem kann vorgesehen sein, dass die Abtriebswelle einen Verbindungsabschnitt zur drehfesten Verbindung des Amboss mit der Abtriebswelle aufweist und der Amboss einen korrespondierenden Gegenverbindungsabschnitt aufweist, wobei der Verbindungsabschnitt und der korrespondierende Gegenverbindungsabschnitt vorzugsweise eine in Drehrichtung der Abtriebswelle formschlüssige Verbindung einzugehen vermögen.

Insbesondere kann der Verbindungsabschnitt eine Ausnehmung mit einem polygonförmigen Querschnitt aufweisen, in die als korrespondierender Gegenverbindungsabschnitt eine Welle mit entsprechendem polygonförmigen Querschnitt eingeschoben werden kann. Alternativ ist selbstverständlich eine Umkehr der beiden Verbindungsabschnitte denkbar.

Die Abtriebswelle kann darüber hinaus einen Lagerabschnitt zur Lagerung der Rückschlagsperre aufweisen. Dies ist insbesondere dann sinnvoll, wenn die Rückschlagsperre derart eingerichtet ist, dass sie eine zu der drehenden Schlagbewegung entgegengesetzte drehende Bewegung unterbindet.

Weiterhin kann vorgesehen sein, dass die Abtriebswelle eine taschenförmige Aufnahme aufweist, in die ein Befestigungsabschnitt des Exzenters eingesetzt, insbesondere eingepresst werden kann.

Darüber hinaus kann vorgesehen sein, dass die Rückschlagsperre eine Halterung zur radialen Abstützung nach außen aufweist. Insbesondere kann hierfür ein ringförmiges oder scheibenförmiges Abstützelement vorgesehen sein, dass sich radial außen über das Gehäuse oder Rippen im Gehäuse abstützt.

Wie eingangs erwähnt, betrifft die vorliegende Erfindung auch einen Schlagmechanismus für ein Elektrohandwerkzeuggerät, wobei das Elektrohandwerkzeuggerät eine Antriebseinheit zum Antrieb von wenigstens einem Werkzeug umfasst und wobei der Schlagmechanismus dazu eingerichtet ist, dann, wenn das wenigstens eine Werkzeug in Richtung seiner Bewegung blockiert ist, eine zu der blockierten Bewegung gleichgerichtete Schlagbewegung auf das Werkzeug zu übertragen, dadurch gekennzeichnet, dass der Schlagmechanismus ferner eine Rückschlagsperre aufweist.

So kann eine Rückschlagsperre, die beispielsweise einen Freilauf umfasst, auch bei Schlagschraubern oder Schlagbohrern vorteilhaft angewendet werden, bei denen ebenfalls das Problem einer blockierenden Schlagspindel bekannt ist.

Die vorstehend im Zusammenhang mit einem Schneidgerät diskutierten weiteren Ausgestaltungsvarianten der Rückschlagsperre finden selbstverständlich ebenfalls bei einem erfindungsgemäßen Schlagmechanismus vorteilhaft Anwendung.

Weitere Weiterbildungen können innerhalb des Schutzumfangs der Erfindung, wie durch die beigefügten Ansprüche festgelegt ist, vorgeschlagen werden.

Nachfolgend wird die Erfindung anhand der beigefügten Figuren detaillierter beschrieben.

Es zeigen schematisch:
- Figur 1: eine isometrische Explosionsdarstellung des erfindungsgemäßen Schlagmechanismus; und
- Figur 2: ein aus dem Stand der Technik bekanntes Schneidgerät mit einem Schlagmechanismus, das in einem Längsschnitt dargestellt ist, wobei die Schnittebene mit der Rotationsachse des Antriebs zusammenfällt.

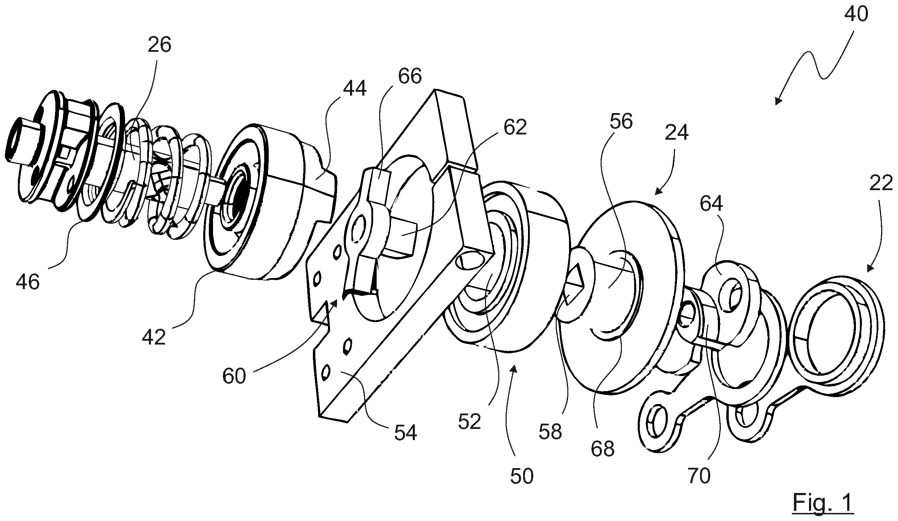

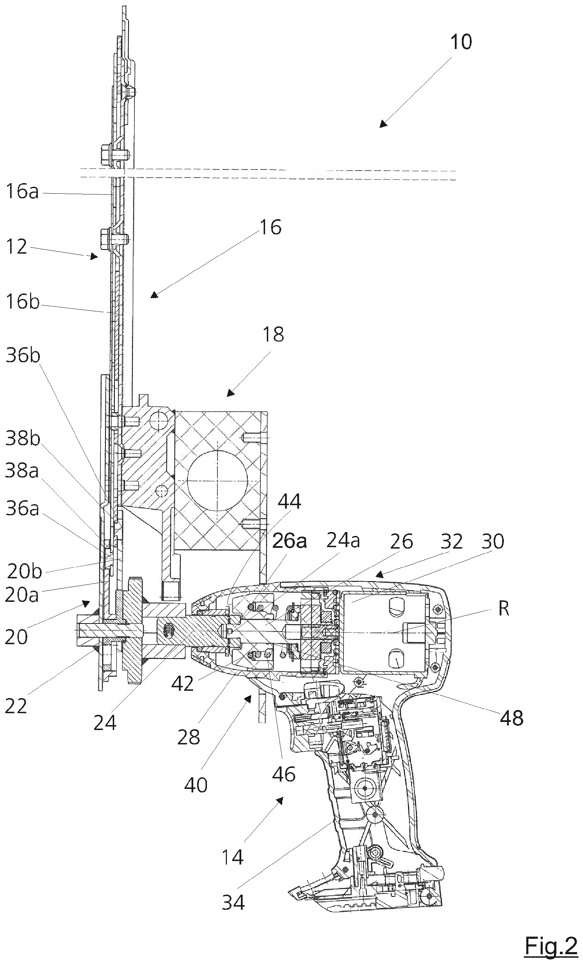

Die Figur 1 zeigt ein erfindungsgemäßes Schlagwerk für ein Elektrohandwerkzeuggerät. Die Figur 2 zeigt schematisch einen Längsschnitt durch ein aus dem Stand der Technik bekanntes Schneidgerät, wobei die Schnittebene mit der Rotationsachse des Antriebs zusammenfällt.

Das bekannte Schneidgerät ist bei der dargestellten Ausführungsform als eine Heckenschere dargestellt und mit dem Bezugszeichen 10 bezeichnet. Die Heckenschere 10 umfasst dabei einen werkzeugseitigen Abschnitt bzw. Werkzeugabschnitt 12 sowie einen Antriebsabschnitt 14. Der Werkzeugabschnitt 12 weist eine Schneidmesserkassette 16 auf, in der zwei zueinander relativ bewegbare Schneidmesser 16a und 16b gelagert aufgenommen sind. Des Weiteren ist zur Abstützung und Befestigung eine Befestigungsanordnung 18 vorgesehen.

Um eine Drehbewegung einer vorgesehenen Antriebseinheit 30 des Antriebsabschnitts 14 in eine translatorische Bewegung der Schneidmesser 16a und 16b zu überführen, ist zudem eine Bewegungswandlungseinrichtung 20 vorgesehen, die in bekannter Weise Kupplungsglieder 20a und 20b aufweist, welche mit Hilfe von Nutensteinen 36a und 36b mit den zugehörigen Schneidmessern 16a und 16b verbunden sind. Hierzu sind die Nutensteine 36a und 36b in zugehörigen Ausnehmungen 38a und 38b in den Schneidmessern 16a und 16b aufgenommen. Die Bewegungswandlungseinrichtung 20 umfasst zudem eine Kurbelwelle 22, deren Drehbewegung eine translatorische Bewegung der damit wirktechnisch verbundenen Kupplungsglieder 20a und 20b zur Folge hat.

Die Kurbelwelle 22 wird in an sich bekannter Weise von der Abtriebswelle 24 angetrieben.

Der Antriebsabschnitt 14 umfasst ein mehrteiliges Gehäuse 28, in dem ein nicht näher dargestellter Antrieb 30 aufgenommen ist. Dieser ist über ein Getriebe 32 mit einer Antriebswelle 26 verbunden, wobei die Antriebswelle 26 sich um eine Rotationsachse R dreht. Das Getriebe 32 kann ein- oder mehrstufig ausgebildet sein, so dass auch ein Über- oder Untersetzen des von dem Antrieb 30 abgegebenen Drehmoments möglich ist. Bei dem Antrieb 30 kann es sich beispielsweise um einen Elektromotor handeln, der beispielsweise akkubetrieben oder über eine übliche Wechselstromquelle mit Strom versorgt wird.

Die Antriebswelle 26 ist an ihrem abtriebswellenseitigen Ende 26a innerhalb einer Lageraufnehmung 24a an der Abtriebswelle 24 lagernd aufgenommen. Eine Übertragung des von ihr abgegebenen Drehmoments erfolgt jedoch über einen Hammer 42, welcher Teil des erfindungsgemäßen Schlagmechanismus 40 ist.

Der Hammer 42 weist an seinem abtriebsseitigen Ende (Stirnfläche) Schlagnocken 44 auf, die mit korrespondierenden Schlagnocken (nicht dargestellt) an der gegenüberliegenden Stirnseite der Abtriebswelle 24 zusammenwirken. Das dem Hammer 42 zugewandten Ende der Abtriebswelle 24 bildet somit einen Amboss für den Hammer 42.

Der Hammer 42 ist ferner beispielsweise über Kugelführungen (angedeutet durch das Bezugszeichen 48) mit der Antriebswelle 26 verbunden. Diese weist vorzugsweise zwei V-förmige Nuten (nicht dargestellt) an ihrer Außenumfangsfläche auf, in denen die Kugelführung des Hammers 42 laufen. Die vorzugsweise V-förmigen Nuten können in der Weise an der Außenumfangsfläche der Antriebswelle 26 ausgebildet sein, dass die Spitze des V in Richtung zu der Abtriebswelle 24 weist. Eine Feder 46 des Schlagmechanismus 40 spannt den Hammer 42 in Richtung zu der Abtriebswelle 24 vor, so dass die Kugelführungen an der Spitze der V-förmigen Nuten anliegen. In dieser Stellung dreht sich der Hammer 42 im Normalbetrieb mit der Antriebswelle 26 mit und überträgt deren Drehmoment über seine Schlagnocken 44 auf die Abtriebswelle 24.

Erst wenn in Folge eines Blockierens eines oder beider Schneidmesser 16a, 16b die Abtriebswelle 24 blockiert wird, wird der Hammer 42 aufgrund des anliegenden Gegendrehmoments der Abtriebswelle 24 relativ zu der Antriebswelle 26 in dem durch die V-förmigen Nuten vorgegebenen Maße rotatorisch wie auch axial bewegt, so dass es zu einem Trennen seiner Schlagnocken 44 von den Schlagnocken der Abtriebswelle 24 kommt. Bei dieser geführten Bewegung des Hammers 42 kommt es in Folge der axialen Komponente der Bewegung in Richtung zu dem Antrieb 30 zu einer zusätzlichen Vorspannung der Feder 46, welche dadurch eine Schlagenergie zwischenspeichert. Ist der Kontakt zu den Schlagnocken der Abtriebswelle 24 vollständig aufgehoben, wird diese zwischengespeicherte Schlagenergie von der Feder 46 freigesetzt und führt zu einer in V-förmigen Nuten geführten Rotationsbewegung des Hammers 42 in Abtriebsrichtung, die dann durch das Aufeinandertreffen der Schlagnocken 44 mit den Schlagnocken der Abtriebswelle 24 gestoppt wird. Dabei wird ein Impuls bzw. Schlag auf die Schlagnocken der Abtriebswelle 24 ausgeübt, der zu einer kurzzeitigen Drehmomentspitze führt, welche eine Schlagbewegung des blockierten Schneidmessers zur Folge hat. Eine solche Schlagbewegung kann von dem Schlagmechanismus 40 mehrmals hintereinander in kurzen Abständen, d. h. oszillierend, ausgeführt werden, bis das blockierende Hindernis überwunden ist.

Dadurch, dass sich auch im Falle eines Blockierens eines oder beider Schneidmesser des erfindungsgemäßen Schneidgeräts der Antrieb zu jedem Zeitpunkt weiterdrehen kann, wird eine Lebensdauererhöhung des Motors erzielt und gleichzeitig vermieden, dass ein erhöhter Stromverbrauch, wie er bei einem Blockieren des Motors auftritt, sich einstellen kann.

In der vorliegenden Darstellung der Figur 2 ist ein einfacher, im Wesentlichen zylinderförmiger Griff 34 an dem mehrteiligen Gehäuse 28 dargestellt. Alternativ kann selbstverständlich auch eine andere Gehäuseform mit einem D-förmigen Griff vorgesehen sein.

Die Figur 1 zeigt schließlich die Details einer denkbaren Ausgestaltungsvariante eines erfindungsgemäßen Schlagwerks mit Rückschlagsperre. Dieses umfasst in der dargestellten Ausführungsform einen Freilauf 50, der auf die Abtriebswelle 24 aufgepresst ist. Dabei erstreckt sich ein Teil der Abtriebswelle 24, nämlich das dem Freilauf 50 zugewandte Ende 56, in die Ausnehmung 52 des Freilaufs 50. Der Freilauf 50 stützt sich weiterhin radial mit seiner Außenumfangsfläche an einer Freilaufhalterung 54 ab, die innerhalb des Gehäuses 28 (in Figur 1 nicht dargestellt) drehfest angeordnet ist.

Anders als bei der aus dem Stand der Technik bekannten Lösung der Figur 2 wird der Amboss vorliegend durch ein separates Bauteil 60 gebildet, das über eine Welle mit polygonförmigem Querschnitt, beispielsweise wie in der gezeigten Ausführungsform über eine Vierkant-Welle 62, mit der Abtriebswelle 24 drehfest verbunden werden kann. Hierzu weist die Abtriebswelle 24 an ihrem Abschnitt 56 ebenfalls eine Ausnehmung 58 mit polygonförmigem Querschnitt auf, in der gezeigten Ausführungsform eine viereckige Ausnehmung 58, die in ihrem Querschnitt im Wesentlichen der Welle 62 des Ambosses 60 entspricht.

Schließlich weist die Abtriebswelle 24 an ihrem von dem Schlagwerk abgewandten Ende eine Exzenteraufnahme auf, die zur Aufnahme eines Exzenters 64 dient. Die Aufnahme 68 (vorliegend nur angedeutet) umfasst eine elliptisch eingefräste Tasche, in die ein korrespondierender elliptischer Abschnitt 70 des Exzenters 64 eingepresst werden kann. Der Exzenter 64 leitet dann einen Drehmoment von der Abtriebswelle weiter auf die Pleuel der Kurbelwelle 22.

Der Vorteil einer erfindungsgemäßen Rückschlagsperre ist darin zu sehen, dass ein Zurückfedern des bzw. der Messer im Falle einer als Heckenschere ausgebildeten Werkzeugmaschine unterbunden wird und so die gesamte Schlagenergie des nächsten Schlags des Schlagwerks in die Bearbeitung des Werkstücks einfließt. Wie bereits vorstehend ausgeführt, lässt sich die vorliegende Erfindung eines Schlagwerks mit einer Rückschlagsperre selbstverständlich auch an anderen Werkzeugmaschinen mit einem Schlagwerk einsetzen, beispielsweise bei Schlagschraubern, Schlagbohrmaschinen oder dergleichen.

## Patentansprüche

1. Schneidgerät (10), das wenigstens ein Schneidmesser (16a, 16b) umfasst, welches zwischen zwei vorbestimmten Maximalhubpunkten bewegbar ist, sowie eine Antriebseinheit (30) zum Antrieb des wenigstens einen Schneidmessers (16a, 16b), wobei das Schneidgerät (10) ferner wenigstens einen Schlagmechanismus (40) umfasst, der dazu eingerichtet ist, dann, wenn das wenigstens eine Schneidmesser (16a, 16b) in Richtung seiner Bewegung blockiert ist, eine zu der blockierten Bewegung gleichgerichtete Schlagbewegung auf das Schneidmesser (16a, 16b) zu übertragen,
**dadurch gekennzeichnet, dass** das Schneidgerät (10) ferner eine Rückschlagsperre aufweist.

2. Schneidgerät (10) nach Anspruch 1,
**dadurch gekennzeichnet, dass** die Rückschlagsperre einen Freilauf (50) umfasst.

3. Schneidgerät (10) nach Anspruch 1 oder 2,
**dadurch gekennzeichnet, dass** die Rückschlagsperre zwischen dem Schlagmechanismus (40) und dem wenigstens einen Schneidmesser (16a, 16b) angeordnet ist.

4. Schneidgerät (10) nach einem der vorhergehenden Ansprüche,
**dadurch gekennzeichnet, dass** die Antriebseinheit (30) eine Antriebswelle (26) zum Antrieb des wenigstens einen Schneidmessers (16a, 16b) aufweist, und dass der Schlagmechanismus (40) einen Hammer (42) umfasst, der auf der Antriebswelle (26) geführt ist, wobei der Hammer (42) dazu eingerichtet ist, die Antriebswelle (26) mit einer mit dem wenigstens einen Schneidmesser (16a, 16b) koppelbaren Abtriebswelle (24) lösbar zu koppeln, um die Drehbewegung der Antriebswelle (26) auf die Abtriebswelle (24) und somit auf das wenigstens eine Schneidmesser (16a, 16b) zu übertragen.

5. Schneidgerät (10) nach Anspruch 4,
**dadurch gekennzeichnet, dass** die Abtriebswelle (24) einen Exzenter (64) zur Übertragung des Antriebsdrehmoments auf das wenigstens eine Schneidmesser (16a, 16b) umfasst.

6. Schneidgerät (10) nach Anspruch 4 oder 5,
**dadurch gekennzeichnet, dass** der Schlagmechanismus (40) einen Amboss (60) umfasst, der mit der Abtriebswelle (24) verbunden ist, um das Antriebsdrehmoment auf diese zu übertragen, wobei der Hammer (42) und der Amboss (60) des Schlagmechanismus (40) jeweils wenigstens einen Schlagnocken (44, 66) aufweisen, wobei die Schlagnocken (44, 66) im Normalbetrieb aneinander anliegen, um die Drehbewegung von der Antriebswelle (26) auf die Abtriebswelle (24) zu übertragen, und wobei die Schlagnocken (44 ,66) dann, wenn das wenigstens eine Schneidmesser (16a, 16b) in Richtung seiner Bewegung blockiert ist, eine relative Rotationsbewegung und/oder eine axiale Bewegung zu einander auszuführen vermögen.

7. Schneidgerät (10) nach Anspruch 6,
**dadurch gekennzeichnet, dass** die Abtriebswelle (24) einen Verbindungsabschnitt (58) zur drehfesten Verbindung des Amboss (60) mit der Abtriebswelle (24) aufweist und der Amboss (60) einen korrespondieren Gegenverbindungsabschnitt (62) aufweist, wobei der Verbindungsabschnitt (58) und der korrespondierende Gegenverbindungsabschnitt (62) vorzugsweise eine in Drehrichtung der Abtriebswelle (24) formschlüssige Verbindung einzugehen vermögen.

8. Schneidgerät (10) nach Anspruch 7,
**dadurch gekennzeichnet, dass** der Verbindungsabschnitt eine Ausnehmung (58) mit einem polygonförmigen Querschnitt aufweist, in die als korrespondierender Gegenverbindungsabschnitt eine Welle (62) mit korrespondierendem Querschnitt eingeschoben werden kann.

9. Schneidgerät (10) nach einem der Ansprüche 4 bis 8,
**dadurch gekennzeichnet, dass** die Abtriebswelle (24) einen Lagerabschnitt (56) zur Lagerung der Rückschlagsperre aufweist.

10. Schneidgerät (10) nach einem der Ansprüche 4 bis 9,
**dadurch gekennzeichnet, dass** die Abtriebswelle (24) eine taschenförmige Aufnahme (68) aufweist, in die ein Befestigungsabschnitt (70) des Exzenters (64) eingesetzt, insbesondere eingepresst werden kann.

11. Schneidgerät (10) nach einem der vorhergehenden Ansprüche,
**dadurch gekennzeichnet, dass** die Rückschlagsperre eine Halterung (54) zur radialen Abstützung nach außen aufweist.

12. Schlagmechanismus (40) für ein Elektrohandwerkzeuggerät (10), wobei das Elektrohandwerkzeuggerät (10) eine Antriebseinheit (30) zum Antrieb von wenigstens einem bewegbaren Werkzeug (16a, 16b) umfasst und wobei der Schlagmechanismus (40) dazu eingerichtet ist, dann, wenn das wenigstens eine bewegbare Werkzeug (16a, 16b) in Richtung seiner Bewegung blockiert ist, eine zu der blockierten Bewegung gleichgerichtete Schlagbewegung auf das Werkzeug (16a, 16b)zu übertragen, **dadurch gekennzeichnet, dass** der Schlagmechanismus (40) ferner eine Rückschlagsperre aufweist.

## Claims

1. Cutting tool (10) that comprises at least one cutting blade (16a, 16b) that is movable between two predetermined maximum stroke points, and a drive unit (30) for driving the at least one cutting blade (16a, 16b), wherein the cutting tool (10) also comprises at least one impact mechanism (40) that is designed, when the at least one cutting blade (16a, 16b) is blocked in the direction of its movement, to transmit an impact movement in the same direction as the blocked movement to the cutting blade (16a, 16b), **characterized in that** the cutting tool (10) also has a kickback lock.

2. Cutting tool (10) according to Claim 1,
**characterized in that** the kickback lock comprises a freewheel (50).

3. Cutting tool (10) according to Claim 1 or 2,
**characterized in that** the kickback lock is arranged between the impact mechanism (40) and the at least one cutting blade (16a, 16b).

4. Cutting tool (10) according to one of the preceding claims,
**characterized in that** the drive unit (30) has a drive shaft (26) for driving the at least one cutting blade (16a, 16b), and **in that** the impact mechanism (40) comprises a hammer (42) that is guided on the drive shaft (26), wherein the hammer (42) is designed to releasably couple the drive shaft (26) to an output shaft (24) able to be coupled to the at least one cutting blade (16a, 16b), in order to transmit the rotary movement of the drive shaft (26) to the output shaft (24) and thus to the at least one cutting blade (16a, 16b).

5. Cutting tool (10) according to Claim 4,
**characterized in that** the output shaft (24) comprises an eccentric (64) for transmitting the drive torque to the at least one cutting blade (16a, 16b).

6. Cutting tool (10) according to Claim 4 or 5,
**characterized in that** the impact mechanism (40) comprises an anvil (60) that is connected to the output shaft (24) in order to transmit the drive torque to the latter, wherein the hammer (42) and the anvil (60) of the impact mechanism (40) each have at least one impact cam (44, 66), wherein the impact cams (44, 66) bear against one another in normal operation, in order to transmit the rotary movement from the drive shaft (26) to the output shaft (24), and wherein the impact cams (44, 66), when the at least one cutting blade (16a, 16b) is blocked in the direction of its movement, are capable of executing a relative rotary movement and/or axial movement with respect to one another.

7. Cutting tool (10) according to Claim 6,
**characterized in that** the output shaft (24) has a connecting portion (58) for connecting the anvil (60) to the output shaft (24) for conjoint rotation, and the anvil (60) has a corresponding mating connecting portion (62), wherein the connecting portion (58) and the corresponding mating connecting portion (62) are capable of entering into preferably a form-fitting connection in a direction of rotation of the output shaft (24).

8. Cutting tool (10) according to Claim 7,
**characterized in that** the connecting portion has a cutout (58) with a polygonal cross section, into which, as corresponding mating connecting portion, a shaft (62) having a corresponding cross section can be introduced.

9. Cutting tool (10) according to one of Claims 4 to 8,
**characterized in that** the output shaft (24) has a bearing portion (56) for mounting the kickback lock.

10. Cutting tool (10) according to one of Claims 4 to 9,
**characterized in that** the output shaft (24) has a pocket-like receptacle (68), into which a fastening portion (70) of the eccentric (64) can be inserted, in particular pressed.

11. Cutting tool (10) according to one of the preceding claims,
**characterized in that** the kickback lock has a holder (54) for radial support toward the outside.

12. Impact mechanism (40) for a portable electric power tool (10), wherein the portable electric power tool (10) comprises a drive unit (30) for driving at least one movable tool (16a, 16b), and wherein the impact mechanism (40) is designed, when the at least one movable tool (16a, 16b) is blocked in the direction of its movement, to transmit an impact movement in the same direction as the blocked movement to the tool (16a, 16b), **characterized in that** the impact mechanism (40) also has a kickback lock.

## Revendications

1. Appareil de coupe (10) comprenant au moins un couteau (16a, 16b) mobile entre deux points de déplacement maximum prédéfinis, ainsi qu'une unité d'entraînement (30) pour l'actionnement de l'au moins un couteau (16a, 16b), dans lequel l'appareil de coupe (10) comprend en outre au moins un mécanisme de frappe (40) agencé pour, lorsque l'au moins un couteau (16a, 16b) est bloqué dans le sens de son déplacement, communiquer au couteau (16a, 16b) un mouvement de frappe dirigé dans le même sens que le mouvement bloqué,
**caractérisé en ce que** l'appareil de coupe (10) est en outre pourvu d'un dispositif anti-choc en retour.

2. Appareil de coupe (10) selon la revendication 1,
**caractérisé en ce que** le dispositif anti-choc en retour comporte un dispositif de roue libre (50).

3. Appareil de coupe (10) selon la revendication 1 ou 2,
**caractérisé en ce que** le dispositif anti-choc en retour est disposé entre le mécanisme de frappe (40) et l'au moins un couteau (16a, 16b).

4. Appareil de coupe (10) selon l'une des revendications précédentes,
**caractérisé en ce que** l'unité d'entraînement (30) comprend un arbre d'entraînement (26) destiné à actionner l'au moins un couteau (16a, 16b), et **en ce que** le mécanisme de frappe (40) comprend un marteau (42) guidé sur l'arbre d'entraînement (26), le marteau (42) étant agencé pour coupler de manière découplable l'arbre d'entraînement (26) avec un arbre de sortie (24) pouvant être couplé avec l'au moins un couteau (16a, 16b) pour transmettre le mouvement de rotation de l'arbre d'entraînement (26) à l'arbre de sortie (24) et ainsi à l'au moins un couteau (16a, 16b).

5. Appareil de coupe (10) selon la revendication 4,
**caractérisé en ce que** l'arbre de sortie (24) comprend un excentrique (64) pour la transmission du couple d'entraînement à l'au moins un couteau (16a, 16b).

6. Appareil de coupe (10) selon la revendication 4 ou 5,
**caractérisé en ce que** le mécanisme de frappe (40) comprend une enclume (60) reliée à l'arbre de sortie (24) pour transmettre le couple d'entraînement à celui-ci, dans lequel le marteau (42) et l'enclume (60) du mécanisme de frappe (40) comprennent respectivement au moins une came de frappe (44, 66), dans lequel les cames de frappe (44, 66) sont en contact entre elles en marche normale pour transmettre le mouvement de rotation de l'arbre d'entraînement (26) à l'arbre de sortie (24), et dans lequel les cames de frappe (44 ,66) peuvent effectuer, lorsque l'au moins un couteau (16a, 16b) est bloqué dans le sens de son déplacement, un mouvement de rotation et/ou un mouvement axial relatif l'une par rapport à l'autre.

7. Appareil de coupe (10) selon la revendication 6,
**caractérisé en ce que** l'arbre de sortie (24) présente un tronçon de liaison (58) pour la liaison solidaire en rotation de l'enclume (60) avec l'arbre de sortie (24) et **en ce que** l'enclume (60) présente un tronçon de liaison complémentaire (62) correspondant, dans lequel le tronçon de liaison (58) et le tronçon de liaison complémentaire (62) correspondant peuvent de préférence réaliser une liaison par engagement positif dans le sens de la rotation de l'arbre de sortie (24).

8. Appareil de coupe (10) selon la revendication 7,
**caractérisé en ce que** le tronçon de liaison présente un évidement (58) avec une section polygonale, dans lequel un tronçon de liaison complémentaire correspondant ayant la forme d'un arbre (62) présentant une section correspondante peut être introduit.

9. Appareil de coupe (10) selon l'une des revendications 4 à 8,
**caractérisé en ce que** l'arbre de sortie (24) présente un tronçon support (56) recevant le dispositif anti-choc en retour.

10. Appareil de coupe (10) selon l'une des revendications 4 à 9,
**caractérisé en ce que** l'arbre de sortie (24) présente un logement (68) en forme de poche, dans lequel un tronçon de fixation (70) de l'excentrique (64) peut être introduit, notamment emmanché.

11. Appareil de coupe (10) selon l'une des revendications précédentes,
**caractérisé en ce que** le dispositif anti-choc en retour présente un support (54) pour l'appui radial vers l'extérieur.

12. Mécanisme de frappe (40) pour un outil électrique portatif (10), dans lequel l'outil électrique portatif (10) comprend une unité d'entraînement (30) pour l'actionnement d'au moins un outil mobile (16a, 16b) et dans lequel le mécanisme de frappe (40) est agencé pour, lorsque l'au moins un outil mobile (16a, 16b) est bloqué dans le sens de son déplacement, communiquer à l'outil (16a, 16b) un mouvement de frappe dirigé dans le même sens que le mouvement bloqué, **caractérisé en ce que** le mécanisme de frappe (40) comprend en outre un dispositif anti-choc en retour.
